# FASCICULE DE BREVET EUROPEEN

(11) **EP 0 667 991 B1**
(45) Date de publication et mention de la délivrance du brevet: **29.01.1997**
(21) Numéro de dépôt: 93924672.4
(22) Date de dépôt: 03.11.1993
(51) Int. Cl.: H02K 41/03

(54) **DISPOSITIF DE CONVERSION ELECTROMECANIQUE, PRODUISANT UN MOUVEMENT LINEAIRE**
LINEARBEWEGUNG ERZEUGENDES ELEKTROMECHANISCHES UMWANDLUNGSGERÄT
ELECTROMECHANICAL CONVERTER DEVICE PRODUCING LINEAR MOTION

(30) Priorité: 04.11.1992 FR 9213236
(43) Date de publication de la demande: 23.08.1995
(73) Titulaire: ECOLE NORMALE SUPERIEURE DE CACHAN (LESIR), F-94230 Cachan (FR)
(72) Inventeur: LUCIDARME, Jean, F-91700 Ste-Geneviève-des-Bois (FR); LECRIVAIN, Michel, F-94200 Ivry-sur-Seine (FR); MULTON, Bernard, F-94260 Fresnes (FR); PREVOND, Laurent, F-93250 Villemonble (FR)
(74) Mandataire: Pontet, Bernard
(86) Numéro de dépôt international: FR9301086
(87) Numéro de publication internationale: WO9410742

## Description

La présente invention concerne un dispositif de conversion électromécanique pour produire un mouvement selon une trajectoire quelconque, en particulier linéaire.

On connaît les vérins électriques et autres actionneurs linéaires, notamment hybrides, c'est à dire dont le flux magnétique est produit conjointement par des enroulement inducteurs et des aimants permanents. Ces actionneurs comportent des stators complexes avec des pièces magnétiques successives et des enroulements électriques sur toute leur longueur. Par conséquent, si l'actionneur doit avoir une course utile importante, le coût du stator devient prohibitif.

Le brevet américain US 4963809 décrit un dispositif actionneur pas à pas linéaire prévu pour déplacer horizontalement un élément suspendu verticalement, en particulier un rideau. Ce dispositif comprend un tube de guidage dans lequel coulisse un équipage mobile et qui comporte une échelle constituée d'une plaque magnétique comprenant une rangée de dents ou de trous répartis suivant un pas prédéterminé.

Ce dispositif actionneur présente l'inconvénient de ne mettre en oeuvre qu'une seule surface d'effort, ce qui entraîne nécessairement des efforts normaux très importants qui doivent être contrés par un dispositif de guidage conséquent. La compensation éventuelle de ces efforts par symétrisation impliquerait une refonte complète de la structure de ce dispositif à cause de l'obligation de prévoir une fente pour le passage du chariot.

Le brevet japonais JP-A-61042270 décrit un moteur linéaire pas-à-pas comprenant un stator de forme cylindrique comportant sur sa surface intérieure une série de dents annulaires formant des pôles statoriques, et un équipage mobile coulissant sur un axe central et comprenant deux culasses magnétiques couplées par un aimant permanent central et dotées chacune d'un enroulement.

Le brevet japonais JP-A-61295858 décrit un moteur linéaire pas-à-pas ne comportant qu'une seule rangée de pôles statoriques disposés sur la surface intérieure d'un stator cylindrique.

Les moteurs linéaires divulgués dans ces deux brevets japonais mettent en oeuvre des structures statoriques crénelées intérieurement qui sont relativement difficiles à réaliser.

Le but de la présente invention est de proposer un dispositif de conversion électromécanique qui soit simple et économique à réaliser.

On souhaite par exemple que le dispositif de conversion électromécanique soit suffisamment peu coûteux pour être utilisable dans des applications du bâtiment, telles que la manoeuvre motorisée des ventaux coulissants, par exemple des baies coulissantes.

Suivant l'invention, le dispositif de conversion électromécanique comprenant un stator en matière magnétique comportant des pôles magnétiques statoriques, et un équipage mobile comportant au moins un enroulement inducteur et un induit définissant des pôles magnétiques mobiles qui dans des positions de conjonction sont en regard de pôles magnétiques statoriques, ce stator étant constitué par un tube de guidage comportant des évidements entre lesquels sont définis les pôles statoriques, et l'équipage mobile étant monté coulissant dans le tube de guidage et guidé de manière coulissante par le tube de guidage, est caractérisé en ce que les pôles magnétiques statoriques sont organisés en au moins deux rangées de pôles statoriques distinctes, l'induit comporte au moins un aimant permanent placé entre deux pièces polaires ayant chacune au moins deux pôles mobiles défilant chacun devant une desdites rangées de pôles statoriques, et en ce que les pôles statoriques et mobiles sont agencés de façon que dans une première de deux positions de conjonction de l'induit, deux premiers pôles mobiles appartenant chacun à l'une respective des pièces polaires coïncident avec deux pôles statoriques appartenant à deux rangées de pôles statoriques différentes tandis que les deux autres pôles mobiles sont décalés par rapport aux pôles statoriques, alors que dans la deuxième des deux positions de conjonction, lesdits deux autres pôles mobiles coïncident à leur tour avec des pôles mobiles statoriques, les deux premiers pôles mobiles étant à leur tour décalés par rapport aux pôles statoriques.

Ainsi, suivant l'invention, on reporte au moins une part essentielle des fonctions magnétiques et électriques génératrices de force motrice sur l'équipage mobile, de sorte que le stator devient une pièce très simple ayant la forme d'un tube pouvant être fendu ou fermé. En outre, ce tube est utilisé pour guider l'équipage mobile dans son déplacement.

Le dispositif selon l'invention présente alors l'avantage primordial d'une très grande simplicité de fabrication alliée à des performantes électrotechniques intéressantes. En effet, le stator peut être réalisé à partir d'un simple profilé dans lequel des trous sont percés. En outre, le rotor ne comprend sous sa forme la plus simple que deux pièces magnétiques parallélépipédiques séparées par un aimant permanent et entourées par un unique bobinage.

De préférence, les évidements séparant les pôles statoriques sont de simples trous disposés en rangées le long du profilé.

De préférence encore, l'induit comprend au moins deux pièces polaires séparées par un aimant permanent et comprenant chacune au moins deux pôles, les pôles statoriques étant disposés de manière que dans deux positions de conjonction, l'un respectif des pôles de l'une des pièces polaires coïncide avec un pôle statorique et l'autre pôle mobile de l'autre pièce polaire de l'induit coïncide avec un pôle statorique d'une autre rangée. Ainsi, lorsque l'équipage mobile passe d'une position de conjonction à l'autre, les pôles statoriques commutent le flux entre l'un et l'autre de deux trajets différents à travers l'induit.

D'autres particularités et avantages de l'invention ressortiront encore de la description ci-après.

Aux dessins annexés, donnés à titre d'exemples non limitatifs :
- la figure 1 est une vue schématique en perspective d'un dispositif de conversion électromécanique selon l'invention, avec coupe selon un plan longitudinal médian ;
- la figure 2 est une vue en perspective d'un profilé statorique convenant pour le mode de réalisation de la figure 1 ;
- la figure 3 est une vue schématique en coupe du dispositif de la figure 1 ;
- les figures 4 à 7 sont quatre vues en élévation du dispositif de la figure 1, à quatre stades successifs de son fonctionnement, avec coupe longitudinale du profilé statorique ;
- la figure 8 est une vue en coupe transversale d'un dispositif selon la figure 1, dans une réalisation pratique ;
- la figure 9 est une vue en coupe selon IX-IX de la figure 8, à échelle agrandie ;
- la figure 10 est une vue analogue à la figure 3 mais concernant une variante de réalisation ; et
- la figure 11 est une vue en perspective, avec coupe partielle dans divers plans, relative à un troisième mode de réalisation, selon deux variantes.

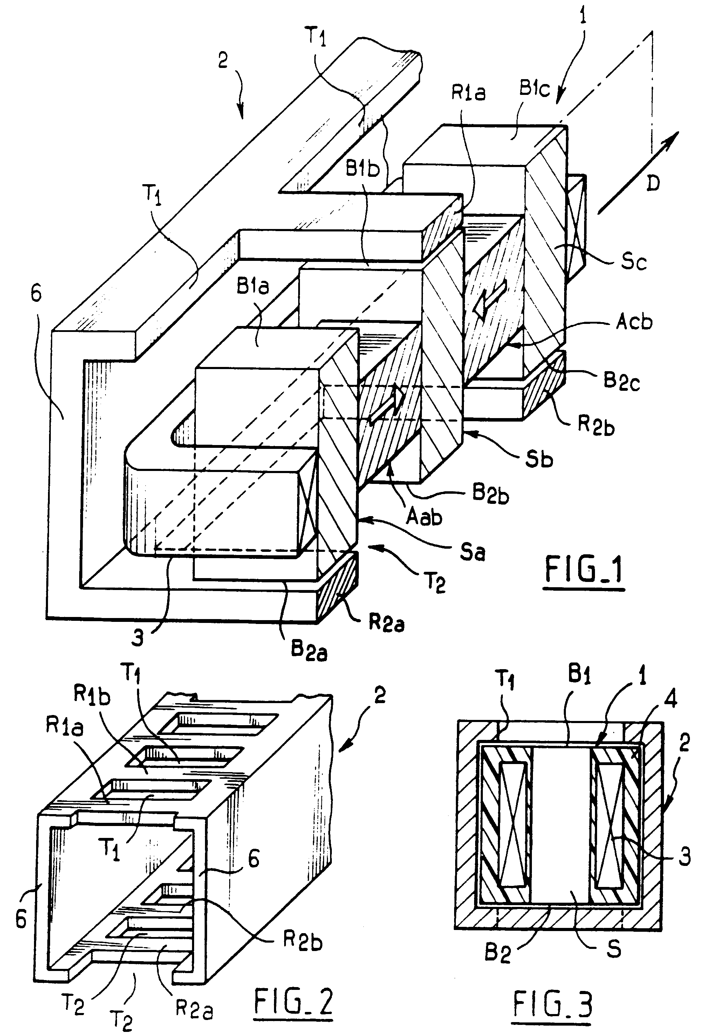

Dans l'exemple représenté aux figures 1 à 3, l'équipage mobile 1 d'un dispositif de conversion électromécanique utilisable pour réaliser un actionneur linéaire, plus particulièrement rectilinéaire, comprend dans l'exemple trois pièces polaires ferromagnétiques Sₐ, S_{b} et S_{c} alignées selon la direction D du mouvement à réaliser de manière que la pièce polaire S_{b} soit en position centrale et les deux autres Sₐ et S_{c} en position d'extrémité. Chaque pièce polaire présente des pôles désignés d'une manière générale par la lettre "B", formés par des faces parallèles à la direction de déplacement D et répartis angulairement autour de celle-ci. Dans ce premier exemple représenté aux figures 1 à 3, les pièces polaires S sont de forme générale parallélépipédique aplatie dans le plan perpendiculaire à la direction D, et présentent chacune un premier pôle mobile B₁ₐ, B_{1b} ou B_{1c} et un second pôle mobile B₂ₐ, B_{2b} ou B_{2c} opposés. Les premiers pôles mobiles B₁ₐ, B_{1b} et B_{1c} appartiennent à la même surface géométrique, plane dans l'exemple, parallèle à la direction D, et il en va de même des seconds pôles mobiles B₂ₐ, B_{2b} et B_{2c}.

Comme le montre la figure 1, les pôles mobiles B forment relativement à la direction de déplacement D le sommet de saillies de la matière ferromagnétique et constituent donc des dents mobiles de l'actionneur.

La pièce polaire centrale S_{b} est reliée à chacune des pièces polaires d'extrémité Sₐ et S_{c} par un aimant permanent respectif A_{ab} et A_{cb}. Ces deux aimants ont des sens de magnétisation contraires parallèles à la direction de déplacement D. Dans l'exemple, la direction d'aimantation des deux aimants est dirigée vers la pièce polaire centrale S_{b}.

L'équipage mobile comprend en outre un enroulement électrique 3 qui entoure tout l'empilement de pièces polaires S et d'aimants permanents A dans un plan parallèle aux pôles mobiles B.

Le stator 2 de l'actionneur linéaire est réalisé à partir d'un profilé tubulaire ferromagnétique de section par exemple carrée, dans lequel l'équipage mobile 1 est monté coulissant. Par exemple, comme le montre la figure 3, les composants actifs de l'équipage mobile 1 peuvent être noyés dans un bloc de résine parallélipipédique 4 dont le profil extérieur correspond, à un jeu de coulissement près, au profil intérieur du profilé statorique 2. Le bloc de résine 4 laisse apparaître, ou bien ne recouvre que d'une mince couche, les premiers pôles B₁ et les secondes pôles B₂ de l'équipage mobile 1.

Deux rangées longitudinales de trous rectangulaires T1 et respectivement T₂ sont pratiquées à travers les parois du profilé statorique 2 qui sont en regard des pôles mobiles B. Dans chaque rangée, les trous définissent entre eux une rangée de pôles statoriques R₁ₐ, R_{1b}, etc ; R₂ₐ, R_{2b}, etc. Les pôles statoriques, que l'on peut désigner généralement par la lettre "R", peuvent également être qualifiés de dents. Les rangées de trous T₁ et T₂ sont décalées longitudinalement l'une par rapport à l'autre de manière que chaque pôle statorique, tel que R₁ₐ, soit situé à mi-distance, mesurée parallèlement à la direction de déplacement D, entre deux pôles statoriques tels que R₂ₐ et R_{2b} de l'autre rangée.

Une paroi 6 au moins du profilé statorique 2 relie de manière continue les deux parois comportant les trous T1, T2 de manière à former culasse magnétique entre elles.

La distance entre deux pôles statoriques d'une même rangée, tels que R₂ₐ et R_{2b} à la figure 1, est égale à la distance entre les deux pièces polaires d'extrémité Sa et Sc de l'équipage mobile 1.

Ainsi, comme le montre la figure 1, l'équipage mobile 1 peut prendre dans le stator 2 des positions de conjonction, dans lesquelles la pièce polaire centrale S_{b} a l'un de ses pôles, par exemple le premier pôle B_{1b}, qui coïncide avec un pôle fixe de la rangée correspondante, dans l'exemple le pôle fixe R₁ₐ, tandis que les pièces polaires d'extrémité Sₐ et S_{c} ont leurs autres pôles, donc les deuxièmes pôles B₂ₐ et B_{2c} dans l'exemple, qui coïncident avec deux pôles successifs R₂ₐ et R_{2b} de l'autre rangée de pôles fixes.

On comprend aisément, et cela sera d'ailleurs explicité plus loin, que l'équipage mobile 1 de la figure 1 peut prendre une autre position de conjonction dans laquelle c'est le deuxième pôle B_{2b} de la pièce polaire centrale S_{b} qui est en coïncidence avec un second pôle fixe R₂, tandis que les premiers pôles B₁ₐ et B_{1c} des deux pièces polaires d'extrémité Sₐ et S_{c} sont en coïncidence avec deux premiers pôles fixes R1 successifs.

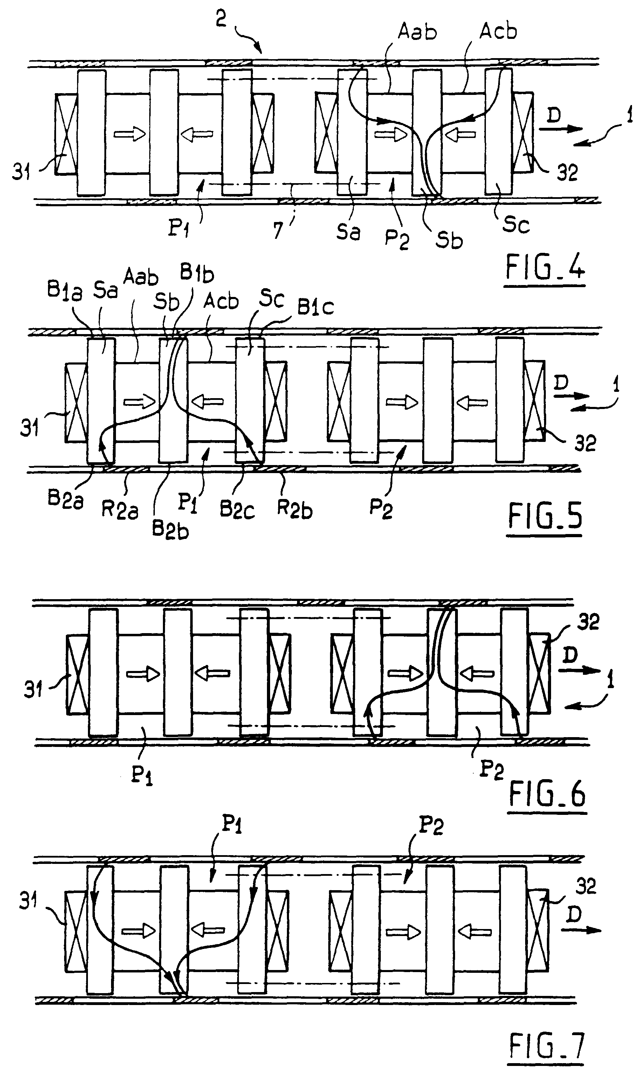

Comme le montrent les figures 4 à 7, pour réaliser un actionneur linéaire on monte dans le tube statorique 2 un équipage mobile comprenant deux ensembles successifs tels que celui décrit en référence à la figure 1, fixés l'un à l'autre par des moyens 7 qui peuvent prendre n'importe quelle forme appropriée pour respecter le fonctionnement dont la description va suivre.

Les deux sous-ensembles ou phases P₁ et P₂ qui forment l'équipage mobile 1 sont reliés l'un à l'autre de manière que lorsque l'une des phases (P₁ à la figure 4) est dans une position de conjonction, l'autre phase (P₂ à la figure 4) est à mi-chemin entre deux positions de conjonction.

A partir de cette situation, dans un mode de fonctionnement en pas à pas, on alimente l'enroulement 32 de la phase P₂ qui est en position intermédiaire de manière que le flux rentre dans les pièces polaires d'extrémité Sa et Sc pour traverser les aimants permanents A_{ab} et A_{cb} dans le sens de l'aimantation permanente puis ressortir par la pièce polaire centrale S_{b}. Le flux ainsi créé se referme à travers le tube statorique 2.

On voit qu'à travers l'équipage mobile 1, les lignes de flux ainsi produites dans les pièces polaires Sₐ, S_{b} et S_{c} de la phase P₂ sont toutes globalement dirigées vers le bas, ce qui correspond à un premier sens du courant fourni à l'enroulement 32. Pendant ce temps, l'enroulement 31 est maintenu au repos. Les forces magnétiques produites dans la phase P2 déplacent l'équipage mobile 1 vers la position représentée à la figure 5 correspondant à une position de conjonction pour la phase P2 et une position intermédiaire pour la phase P1. A ce stade, on met l'enroulement 32 de la phase P2 au repos et on alimente l'enroulement 31 de la phase P1 de façon que les lignes de flux aillent, une fois encore, des pièces polaires d'extrémité Sₐ et S_{c} vers la pièce polaire centrale S_{b}. Ainsi, une fois encore, le flux produit par l'enroulement s'ajoute à celui des aimants permanents. Mais cette fois, les pièces polaires d'extrémité Sₐ et S_{c} vont coïncider avec les seconds pôles fixes R₂ₐ et R_{2b}. Il en résulte que les lignes de flux traversent l'équipage mobile vers le haut, c'est à dire en sens contraire du flux qui traversait la phase P2 à la figure 4, et par conséquent l'enroulement 31 doit être alimenté dans un second sens, contraire au premier.

Les forces qui en résultent amènent l'équipage mobile dans la position représentée à la figure 6, dans laquelle la phase P1 est dans sa position de conjonction autre que celle de la figure 4 et la phase P2 se trouve à nouveau en position intermédiaire. On met l'enroulement 31 au repos et on alimente l'enroulement 32 dans le deuxième sens, contraire à celui de la figure 4, pour déplacer l'équipage mobile 1 jusqu'à la situation représentée à la figure 7 à partir de laquelle, par mise au repos de l'enroulement 32 et alimentation de l'enroulement 31 dans le premier sens, on repassera à la situation de la figure 4.

Dans un mode de fonctionnement auto-piloté, on envoie dans chaque enroulement une onde de courant alternatif en synchronisme avec la variation alternative du flux généré par les aimants permanents dans les enroulements.

Ainsi, pour chaque phase P1 ou P2, les pôles statoriques R se comportent comme des commutateurs de flux magnétique grâce auxquels le flux emprunte l'un ou l'autre de deux trajets en Y à travers chaque phase.

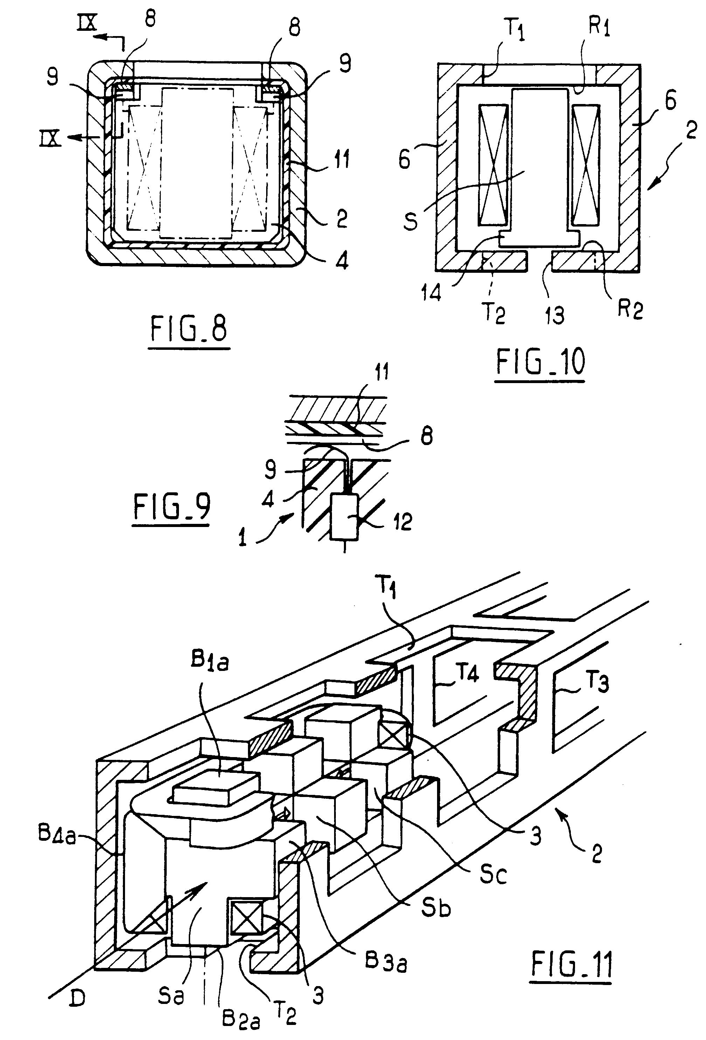

Pour alimenter les enroulements 31 et 32, on peut relier l'équipage mobile à des bornes fixes par un cordon souple par exemple du genre ayant au repos une configuration hélicoïdale. On peut aussi, comme représenté à la figure 8, placer dans le profilé statorique 2, deux rails d'alimentation 8 contre lesquels glissent des frotteurs élastiques 9 portés par l'équipage mobile 1. La paroi intérieure 2 du profilé est, dans l'exemple représenté, recouverte d'un revêtement par exemple en polytétrafluoréthylène 11, ayant à la fois un très faible coefficient de frottement et des qualités d'isolant électrique. Le bloc de résine 4 glisse contre le revêtement 11. Les rails 8 sont fixés sur le revêtement avec en cas de besoin une isolation complémentaire. Pour réaliser la commutation permettant l'alimentation sélective et alternée des deux enroulements 31 et 32, on peut prévoir qu'il y ait un rail 8 pour chaque sens de courant, les rails comportant chacun une alternance convenable de zones conductrices et de zones isolantes pour distribuer convenablement le courant, dans le sens voulu et au moment voulu, à chaque enroulement 31 cu 32. Selon les applications le retour de courant peut se faire par la masse du profilé 2 ou par un conducteur de retour non représenté, par exemple un troisième rail 8.

Mais il est également possible, comme illustré plus particulièrement à la figure 9, de ne prévoir que deux rails 8, ayant entre eux une tension continue uniforme, l'équipage mobile 1 comportant un dispositif de commutation 12 pour appliquer ce courant dans le sens voulu et au moment voulu à chacun des enroulements. Il existe de nombreux procédés connus pour commuter automatiquement un courant dans un équipage mobile de machine électrodynamique. On peut utiliser un détecteur de proximité monté sur l'équipage mobile pour détecter la position de l'équipage mobile par rapport aux pôles fixes "R". On pourrait par exemple, d'une manière adaptée à l'invention, détecter dans l'enroulement qui n'est pas alimenté le courant induit par les aimants permanents, le résultat de cette détection donnant une indication de la position de l'équipage mobile par rapport aux pôles fixes "R".

On peut également faire appel à une détection de position extérieure pour relever la position de l'équipage mobile et transmettre à l'équipage mobile, par exemple par la méthode des courants porteurs, des signaux de commandes de commutation électrique.

Dans les exemples décrits jusqu'à présent, le profilé statorique 2 a été décrit et représenté comme un tube fermé, à l'exception des trous T. Ceci implique que l'équipage mobile déplace l'organe à commander soit par l'intermédiaire d'une tige sortant du profilé statorique 2 par l'une des ses extrémités, soit par action sans contact, en particulier action magnétique. Par exemple, si l'actionneur linéaire sert à commander un rideau, on peut prévoir que le profilé 2 sert en même temps de tringle pour le rideau, autour de laquelle coulissent des anneaux auxquels le rideau est accroché. En tête de la série d'anneaux un curseur en matière magnétique coulisse autour du profilé 2 en même temps que l'équipage mobile 1 coulisse à l'intérieur du profilé 2.

Mais comme représenté à la figure 10 on peut également souhaiter un couplage direct entre l'équipage mobile 1 et l'organe à entraîner. Dans ce cas, le profilé 2 peut présenter une fente longitudinale 13, de préférence à travers l'une des parois comportant les trous T1 ou T2 de manière à éviter d'interrompre l'une des parois 6 formant culasse magnétique. Pour compenser la surface active ôtée aux pôles statoriques R2 par la fente 13, les pièces polaires S comportent un épanouissement polaire 14 du côté de la paroi traversée par la fente 13. La fente peut servir de moyen de positionnement angulaire de l'équipage mobile, de sorte que la section du tube pourrait être ronde même si l'on désire que l'équipage mobile ne puisse pas tourner autour de l'axe du tube.

L'exemple représenté à la figure 11 ne sera décrit qu'en ce qui concerne ses différences par rapport aux précédents.

Les pièces polaires Sₐ, S_{b} et S_{c} comportent chacune quatre pôles, par exemple B₁ₐ, B₂ₐ, B₃ₐ et B₄ₐ répartis à intervalles angulaires de 90° autour de la direction de déplacement D. Chaque paroi du profilé statorique 2 comporte des rangées de trous T1 et T2, T3 et T4. Dans l'exemple illustré par la partie droite de la figure 11, les trous tels que T1 et T2 ou encore T3 et T4 situés sur des parois opposées du profilé 2 sont en regard les uns des autres et décalés longitudinalement d'un demi-pas par rapport aux trous des deux autres parois. Il n'y a alors que deux enroulements 3 entourant chacun la rangée de dents adjacentes à l'une de deux parois opposées, les dents B1 et B2 dans l'exemple. Dans ce cas, la structure fonctionne sensiblement comme il a été dit plus haut, excepté que les culasses sont constituées par les régions d'angle du profilé 2, ce qui correspond à des trajets magnétiques plus courts. Les deux enroulements sont toujours alimentés en sens opposés l'un de l'autre pour ramener le flux vers le centre des pièces polaires d'extrémité Sₐ et S_{c}, le faire passer par les deux aimants permanents puis le faire diverger vers deux dents opposées à partir du centre de la pièce polaire centrale S_{b}.

Selon une autre version illustrée par la partie gauche de la figure 11, il y a quatre enroulements entourant chacun les dents associées à l'une des faces du profilé, et toutes les rangées de pôles fixes sont décalées longitudinalement par rapport aux trois autres d'un quart de pas, un demi-pas et respectivement trois quarts de pas. Ainsi, dans chaque position de l'équipage mobile, il y a deux rangées de pôles mobiles B qui définissent une situation de conjonction et les deux autres rangées définissent une position intermédiaire. En alimentant dans le sens convenable les enroulements entourant les dents mobiles qui sont dans la situation intermédiaire, et en laissant au repos les deux autres enroulements, on provoque le mouvement de l'équipage mobile selon la direction D jusqu'à ce que les deux rangées de dents initialement en situation intermédiaire soient désormais en position de conjonction, alors que les deux rangées de dents initialement en position de conjonction atteignent une position intermédiaire. On alimente alors les deux autres enroulements dans le sens convenable et on supprime l'alimentation des deux enroulements précédemment alimentés pour que le mouvement se poursuive. De cette manière, les deux phases sont confondues matériellement dans un seul et même induit et il n'est donc plus nécessaire que l'équipage mobile comporte deux sous-ensembles accouplés l'un à l'autre comme cela était représenté aux figures 4 à 7.

Dans l'ensemble des exemples décrits, les surfaces actives des aimants permanents peuvent être grandes par rapport aux surfaces d'entrefer. Il en résulte une induction d'excitation élevée dans l'entrefer. Ainsi même avec des aimants peu coûteux, en ferrite, on obtient les performances que l'on attend habituellement de matériaux beaucoup plus coûteux, tels que les terres rares.

En outre, le stator est simplifié à l'extrème et peut être débarrassé de toute fonction nécessitant des pièces localisées ou des commandes ou branchements à appliquer sur ce stator.

Bien entendu, l'invention n'est pas limitée aux exemples décrits et représentés.

Il n'est pas nécessaire que l'équipage mobile comporte des aimants permanents. Il pourrait ne comporter qu'un simple barreau de fer doux, correspondant à l'une des pièces polaires de la figure 1, entouré par un enroulement convenablement commuté au cours du déplacement de cet équipage.

Même si l'on réalise une structure hybride, c'est à dire avec aimants permanents, il suffit de deux pièces polaires avec un seul aimant permanent pour réaliser une phase, l'utilisation de trois pièces polaires et deux aimants ayant simplement pour avantage de supprimer les couples de basculement sur l'équipage mobile pendant son coulissement.

On pourrait utiliser un profilé sans décalage longitudinal entre les pôles fixes, les pièces polaires étant par exemple disposées obliquement par rapport à la direction de déplacement de l'équipage mobile, ou encore prolongées par des cornes polaires ou épanouissements polaires de forme appropriée pour réaliser la commutation de flux décrite.

Par rapport au mode de réalisation de la figure 11, on peut augmenter encore le nombre de pôles autour de l'axe de déplacement de l'équipage mobile. Même dans le cas où les quatre rangées de pôles statoriques sont toutes décalées longitudinalement les unes par rapport aux autres, on peut ne prévoir que deux enroulements, entourant deux rangées de pôles mobiles dont chacune est en position de conjonction.

Dans tous les exemples, on peut également augmenter le nombre de phases, notamment pour rendre la force de déplacement plus uniforme.

On peut donner au profilé 2 une forme courbe ou sinueuse pour guider l'équipage mobile 1 selon une trajectoire correspondante.

On peut prévoir un enroulement autour de chaque dent à la place des enroulements entourant plusieurs dents.

On peut monter l'équipage mobile sur roulettes ou galets dans le tube.

## Revendications

1. Dispositif de conversion électromécanique comprenant un stator en matière magnétique comportant des pôles magnétiques statoriques (R1a, R1b, R2a, R2b), et un équipage mobile (1) comportant au moins un enroulement inducteur (3 ; 31, 32) et un induit (Sa, Sb, Sc) définissant des pôles magnétiques mobiles (B1a, b, c ; B2a, b, c) qui dans des positions de conjonction sont en regard de pôles magnétiques statoriques, ce stator étant constitué par un tube de guidage (2) comportant des évidements (T₁, T₂) entre lesquels sont définis les pôles statoriques, et l'équipage mobile (1) étant monté coulissant dans le tube de guidage (2) et guidé de manière coulissante par le tube de guidage, caractérisé en ce que les pôles magnétiques statoriques (R1a, R1b ; R2a, R2b) sont organisés en au moins deux rangées de pôles statoriques distinctes, en ce que l'induit comporte au moins un aimant permanent (Aab) placé entre deux pièces polaires (Sa, Sb) ayant chacune au moins deux pôles mobiles (B1a, B2a ; B1b, B2b) défilant chacun devant une desdites rangées de pôles statoriques, et en ce que les pôles statoriques et mobiles sont agencés de façon que dans une première de deux positions de conjonction de l'induit, deux premiers pôles mobiles (B1a, B2b ; B2a, B1b) appartenant chacun à l'une respective des pièces polaires (Sa, Sb) coïncident avec deux pôles statoriques appartenant à deux rangées de pôles statoriques différentes tandis que les deux autres pôles mobiles sont décalés par rapport aux pôles statoriques, alors que dans la deuxième des deux positions de conjonction, lesdits deux autres pôles mobiles coïncident à leur tour avec des pôles statoriques, les deux premiers pôles mobiles étant à leur tour décalés par rapport aux pôles statoriques.

2. Dispositif selon la revendication 1, caractérisé en ce que les évidements sont des trous (T₁, T₂).

3. Dispositif selon la revendication 1 ou 2, caractérisé en ce que le tube de guidage (2) est réalisé à partir d'un profilé.

4. Dispositif selon l'une des revendications 1 à 3, caractérisé en ce que le tube de guidage (2) a une section polygonale et l'équipage mobile (1) un profil extérieur au moins partiellement correspondant, de façon à empêcher la rotation relative du stator (2) et de l'équipage mobile (1) autour de l'axe du tube.

5. Dispositif selon l'une des revendications 1 à 4, caractérisé en ce que l'enroulement inducteur (3 ; 31, 32) est alimenté dans deux sens différents selon que l'induit s'approche de la première position de conjonction ou de la deuxième position de conjonction.

6. Dispositif selon l'une des revendications 1 à 5, caractérisé en ce que les rangées de pôles statoriques (R1a, R1b ; R2a, R2b) sont décalées longitudinalement l'une par rapport à l'autre.

7. Dispositif selon l'une des revendications 1 à 6, caractérisé en ce que chaque pièce polaire comporte quatre pôles (B1a, B2a, B3a, B4a) et le tube de guidage (2) définit quatre rangées de pôles statoriques.

8. Dispositif selon la revendication 1 à 7, caractérisé en ce que l'induit comporte trois pièces polaires (Sₐ, S_{b}, S_{c}) séparées par deux aimants permanents (Aab, Acb) ayant des sens d'aimantation opposés sensiblement parallèles au sens de déplacement (D) de l'équipage mobile (1) dans le tube de guidage (2).

9. Dispositif selon l'une des revendications 1 à 8, caractérisé en ce que l'équipage mobile (1) comporte au moins deux induits équipés chacun d'au moins un enroulement (31, 32), et se suivant selon la direction de déplacement de l'équipage mobile (1) dans le tube de guidage (2), les deux induits étant fixés l'un à l'autre de manière à être magnétiquement décalés l'un par rapport à l'autre relativement aux pôles statoriques (R1a, R1b ; R2a, R2b).

10. Dispositif selon l'une des revendications 1 à 9, caractérisé en ce que pour le montage coulissant de l'équipage mobile (1) dans le tube de guidage (2), la paroi intérieure du profilé est garnie d'un matériau de glissement (11).

11. Dispositif selon l'une des revendications 1 à 10, caractérisé en ce que l'induit de l'équipage mobile (1) est noyé dans un bloc de résine (4) dont le profil extérieur correspond sensiblement au profil intérieur du tube de guidage (2).

12. Dispositif selon l'une des revendications 1 à 11, caractérisé en ce qu'il est prévu à l'intérieur du profilé au moins un rail d'alimentation électrique longitudinal (8), l'équipage mobile (1) comportant un contact (9) coopérant avec ce rail.

## Patentansprüche

1. Elektromechanisches Umwandlungsgerät, bestehend aus einem Stator aus magnetischem Material, der magnetische Statorpole (R1a, R1b, R2a, R2b) umfaßt, und aus bewegten Teilen (1), die zumindest eine Erregerwicklung (3; 31, 32) und einen Anker (Sa, Sb, Sc) umfassen, der bewegliche Magnetpole (B1a, b, c; B2a, b, c) definiert, die sich in Konjunktionspositionen gegenüber von magnetischen Statorpolen befinden, wobei dieser Stator von einem Führungsrohr (2) gebildet wird, das Aussparungen (T₁, T₂) umfaßt, zwischen denen die Statorpole definiert sind, und wobei die beweglichen Teile (1) gleitend in dem Führungsrohr (2) montiert sind und gleitend von dem Führungsrohr geführt werden, dadurch gekennzeichnet, daß die magnetischen Statorpole (R1a, R1b; R2a, R2b) in zumindest zwei unterschiedlichen Reihen von Statorpolen angeordnet sind, daß der Anker zumindest einen Dauermagneten (Aab) umfaßt, der zwischen zwei Polstücken (Sa, Sb) angeordnet ist, die jeweils zumindest zwei bewegliche Pole (B1a, B2a; B1b, B2b) aufweisen, die jeweils vor einer der genannten Reihen von Statorpolen ablaufen, und daß die Statorpole und die beweglichen Pole derart angeordnet sind, daß in einer ersten von zwei Konjunktionspositionen des Ankers zwei erste bewegliche Pole (B1a, B2b; B2a, B1b), die jeweils einem der beiden Polstücke (Sa, Sb) angehören, mit zwei Statorpolen zusammenfallen, die zwei unterschiedlichen Statorpolreihen angehören, während die beiden anderen beweglichen Pole in bezug auf die Statorpole versetzt sind, während in der zweiten der beiden Konjunktionspositionen die beiden anderen beweglichen Pole ihrerseits mit Statorpolen zusammenfallen, wobei die beiden ersten beweglichen Pole ihrerseits in bezug auf die Statorpole versetzt sind.

2. Gerät nach Anspruch 1, dadurch gekennzeichnet, daß die Aussparungen Löcher (T₁, T₂) sind.

3. Gerät nach Anspruch 1 oder 2, dadurch gekennzeichnet, daß das Führungsrohr (2) aus einem Profilstahl hergestellt ist.

4. Gerät nach einem der Ansprüche 1 bis 3, dadurch gekennzeichnet, daß das Führungsrohr (2) einen polygonalen Querschnitt und die beweglichen Teile (1) ein zumindest teilweise entsprechendes Außenprofil aufweisen, so daß die relative Rotation des Stators (2) und der beweglichen Teile (1) um die Achse des Rohrs verhindert wird.

5. Gerät nach einem der Ansprüche 1 bis 4, dadurch gekennzeichnet, daß die Erregerwicklung (3; 31, 32) in zwei unterschiedlichen Richtungen gespeist wird, je nachdem, ob sich der Anker der ersten Konjunktionsposition oder der zweiten Konjunktionsposition annähert.

6. Gerät nach einem der Ansprüche 1 bis 5, dadurch gekennzeichnet, daß die Statorpolreihen (R1a, R1b; R2a, R2b) längs zueinander versetzt sind.

7. Gerät nach einem der Ansprüche 1 bis 6, dadurch gekennzeichnet, daß jedes Polstück vier Pole (B1a, B2a, B3a, B4a) umfaßt und das Führungsrohr (2) vier Statorpolreihen definiert.

8. Gerät nach Anspruch 1 bis 7, dadurch gekennzeichnet, daß der Anker drei Polstücke (Sₐ, S_{b}, S_{c}) umfaßt, die durch zwei Dauermagnete (Aab, Acb) getrennt sind, die entgegengesetzte Magnetisierungsrichtungen aufweisen, die im wesentlichen zu der Verschieberichtung (D) der beweglichen Teile (1) in dem Führungsrohr (2) parallel sind.

9. Gerät nach einem der Ansprüche 1 bis 8, dadurch gekennzeichnet, daß die beweglichen Teile (1) zumindest zwei Anker umfassen, die jeweils mit zumindest einer Wicklung (31, 32) versehen sind und sich entlang der Verschieberichtung der beweglichen Teile (1) in dem Führungrohr (2) fortsetzen, wobei die beiden Anker aneinander derart befestigt sind, daß sie magnetisch zueinander in bezug auf die Statorpole (R1a, R1b; R2a, R2b) versetzt sind.

10. Gerät nach einem der Ansprüche 1 bis 9, dadurch gekennzeichnet, daß für die gleitende Montage der beweglichen Teile (1) in dem Führungsrohr (2) die Innenwandung des Profilstahls mit einem Gleitmaterial (11) versehen ist.

11. Gerät nach einem der Ansprüche 1 bis 10, dadurch gekennzeichnet, daß der Anker der beweglichen Teile (1) in einen Harzblock (4) eingelassen ist, dessen äußeres Profil im wesentlichen dem inneren Profil des Führungsrohrs (2) entspricht.

12. Gerät nach einem der Ansprüche 1 bis 11, dadurch gekennzeichnet, daß im Inneren des Profilstahls zumindest eine Längsschiene zur elektrischen Versorgung (8) vorgesehen ist, wobei die beweglichen Teile (1) einen Kontakt (9) umfassen, der mit dieser Schiene zusammenwirkt.

## Claims

1. Electromechanical converter device including a stator of magnetic material containing magnetic stator poles (R₁ₐ, R_{1b}, R₂ₐ, R_{2b}), and a mobile assembly (1) containing at least one excitation winding (3; 31, 32) and one armature (Sₐ, S_{b}, S_{c}) defining mobile magnetic poles (B_{1a, b, c} ; B_{2a, b, c}) which in positions of conjunction are facing magnetic stator poles, this stator being constituted by a guide tube (2) containing recesses (T₁, T₂) between which the stator poles are defined, and the mobile assembly (1) being mounted in a sliding way in the guide tube (2) and guided in a sliding manner by the guide tube, characterized in that the magnetic stator poles (R₁ₐ, R_{1b}, R₂ₐ, R_{2b}) are organised in at least two rows of distinct stator poles, in that the armature contains at least one permanent magnet (A_{ab}) placed between two pole pieces (Sₐ, S_{b}) each having at least two movable poles (B₁ₐ, B₂ₐ, B_{1b}, B_{2b}) each running in front of one of said rows of stator poles, and in that the stator and movable poles are arranged in such a way that in the first of two positions of conjunction of the armature, the two first movable poles (B₁ₐ, B_{2b}, B₂ₐ, B_{1b}) each belonging to one of the respective pole pieces (Sₐ, S_{b}) coincide with two stator poles belonging to two rows of different stator poles while the two other movable poles are offset relative to the stator poles, whereas in the second of the two positions of conjunction, said two other movable poles coincide in turn with stator poles, the two first movable poles being in turn offset relative to the stator poles.

2. Device according to claim 1, characterized in that the recesses are holes (T₁, T₂).

3. Device according to claim 1 or 2, characterized in that the guide tube (2) is produced from an extruded section.

4. Device according to claims 1 to 3, characterized in that the guide tube (2) has a polygonal section and the mobile assembly (1) has an external section corresponding at least partially, so as to prevent the relative rotation of the stator (2) and the mobile assembly (1) about the axis of the tube.

5. Device according to one of claims 1 to 4, characterized in that the excitation winding (3; 31, 32) is supplied with current in two different directions according to whether the armature approaches the first position of conjunction or the second position of conjunction.

6. Device according to one of claims 1 to 5, characterized in that the rows of stator poles (R₁ₐ, R_{1b}, R₂ₐ, R_{2b}) are longitudinally offset relative to each other.

7. Device according to one of claims 1 to 6, characterized in that each pole piece contains four poles (B₁ₐ, B₂ₐ, B₃ₐ, B₄ₐ) and the guide tube (2) defines four rows of stator poles.

8. Device according to claims 1 to 7, characterized in that the armature contains three pole pieces (Sₐ, S_{b}, S_{c}) separated by two permanent magnets (A_{ab}, A_{cb}) being magnetized in opposite directions approximately parallel to the traveling direction (D) of the mobile assembly (1) in the guide tube (2).

9. Device according to one of claims 1 to 8, characterized in that the mobile assembly (1) contains at least two armatures each equipped with at least one winding (31, 32), and following each other according to the traveling direction of the mobile assembly (1) in the guide tube (2), the two armatures being fixed to one another so as to be magnetically offset one relative to the other in relation to the stator poles (R₁ₐ, R_{1b}, R₂ₐ, R_{2b}).

10. Device according to one of claims 1 to 9, characterized in that for the mobile assembly (1) to be mounted in a slideable fashion in the guide tube (2), the internal wall of the extruded section is coated with a material (11) with a low coefficient of friction.

11. Device according to one of claims 1 to 10, characterized in that the armature of the mobile assembly (1) is embedded in a resin block (4) the external section of which approximately corresponds to the internal section of the guide tube (2).

12. Device according to one of claims 1 to 11, characterized in that inside the section at least one longitudinal electric supply rail (8) is provided, the mobile assembly (1) containing a contact (9) which cooperates with this rail.
